# DEMANDE DE BREVET EUROPEEN

(11) **EP 4 656 513 A1**
(43) Date de publication de la demande: **03.12.2025**
(21) Numéro de dépôt: 25177145.7
(22) Date de dépôt: 16.05.2025
(51) Int. Cl.: B64C 3/32, B64D 27/40

(54) **AÉRONEF COMPRENANT AU MOINS UN SYSTÈME D ATTACHE VOILURE QUI COMPORTE AU MOINS UNE BIELLE LATÉRALE**

(30) Priorité: 30.05.2024 FR 2405613
(71) Demandeur: AIRBUS OPERATIONS (S.A.S.), 31060 Toulouse (FR)
(72) Inventeur: CASSAGNE, Jérôme, 31060 TOULOUSE (FR); DEFORET, Thomas, 31060 TOULOUSE (FR); PASNON, Quentin, 31060 TOULOUSE (FR); MOLINA, Romain, 31060 TOULOUSE (FR)
(74) Mandataire: Fantin, Laurent

(57) **Abrégé**

L'invention a pour objet un aéronef comprenant au moins un système d'attache voilure qui relie une aile (54) et une structure primaire (62) d'un mât et comporte :
- au moins des première et deuxième attaches voilures configurées pour assurer une reprise au moins partielle des efforts et des couples et positionnées au niveau du longeron supérieur (64.1) de la structure primaire (62),
- au moins une bielle latérale (76) qui s'étend entre des première et deuxième extrémités (76.1, 76.2) reliées respectivement à la structure primaire (62) et à l'aile (54), la deuxième extrémité (76.2) étant espacée au moins selon la direction transversale horizontale (Y) et/ou la direction transversale verticale (Z) par rapport à la structure primaire (62).

Selon cet agencement, il est possible de réduire la largeur de la structure primaire (62) sans augmenter les contraintes au niveau des première et deuxième attaches voilures.

## Description

La présente demande se rapporte à un aéronef comprenant au moins un système d'attache voilure qui comporte au moins une bielle latérale.

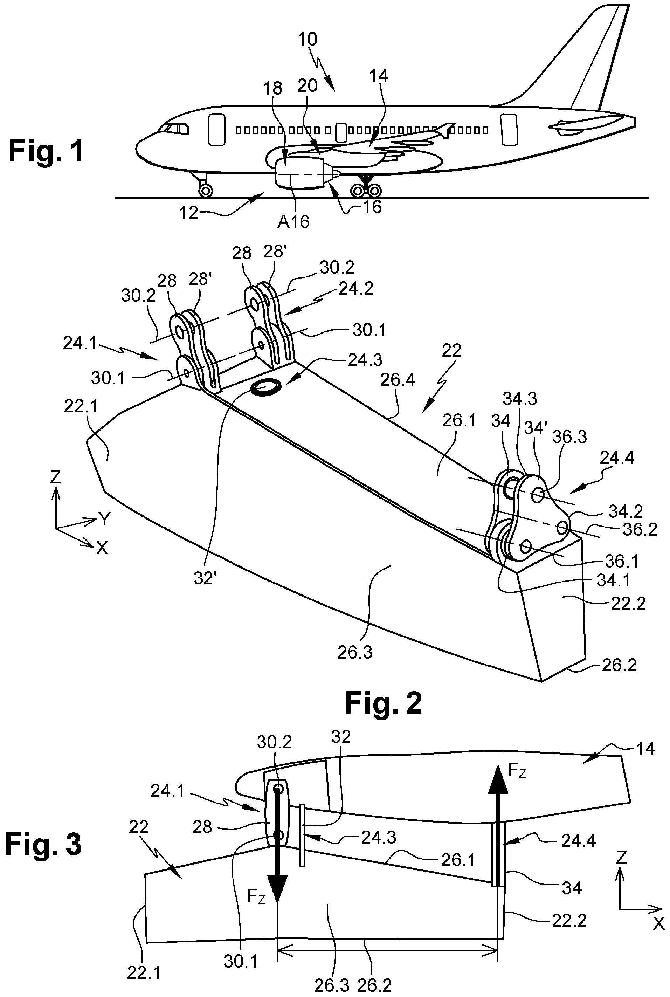

Selon un mode de réalisation visible sur la figure 1, un aéronef 10 comprend plusieurs ensembles de propulsion 12 positionnés sous les ailes 14 de l'aéronef. Chaque ensemble de propulsion 12 comprend un moteur 16, une nacelle 18 positionnée autour du moteur 16 ainsi qu'un mât 20 reliant le moteur 16 et l'aile 14.

Le mât 20 comprend une structure primaire 22 (visible sur les figures 2 à 4) reliée au moteur 16 par au moins un système d'attache moteur ainsi qu'à l'aile 14 par au moins un système d'attache voilure 24.1 à 24.4.

Pour la présente invention, une direction longitudinale, notée X, est sensiblement parallèle à l'axe de rotation A16 du moteur 16. Une direction transversale horizontale, notée Y, est une direction horizontale et perpendiculaire à l'axe de rotation A16 du moteur 16. Une direction transversale verticale, notée Z, est perpendiculaire à l'axe de rotationA16 du moteur 16. Un plan longitudinal est un plan passant par l'axe de rotation A16 du moteur 16. Un plan transversal est un plan perpendiculaire à l'axe de rotation A16 du moteur 16. Les termes avant/arrière font référence au sens de l'écoulement d'un flux d'air dans le moteur 16, qui s'écoule de l'avant vers l'arrière.

Selon un mode de réalisation visible sur la figure 2, la structure primaire 22 s'étend entre des extrémités avant et arrière 22.1, 22.2 et comprend des longerons supérieur et inférieur 26.1, 26.2 ainsi que des panneaux latéraux droit et gauche 26.3, 26.4.

Selon un mode de réalisation visible sur les figures 2 à 4, le système d'attache voilure 24 comprend des première et deuxième attaches voilures avant 24.1, 24.2, une attache voilure intermédiaire 24.3 et une attache voilure arrière 24.4.

Chaque attache voilure avant 24.1, 24.2 comprend deux biellettes 28. 28' (ou manilles), parallèles entre elles et faiblement espacées, qui présentent chacune une première extrémité reliée par un premier élément de liaison 30.1 à la structure primaire 22 ainsi qu'une deuxième extrémité reliée par un deuxième élément de liaison 30.2 à l'aile 14. Ces premier et deuxième éléments de liaison 30.1, 30.2 présentent des axes de pivotement sensiblement parallèles à la direction transversale horizontale Y.

L'attache voilure intermédiaire 24.3 comprend un axe de cisaillement 32 qui s'insère dans un logement (rotule) 32' de la structure primaire 22. L'axe de cisaillement 32 et le logement 32' forment une liaison pivotante présentant un axe de pivotement sensiblement parallèle à la direction transversale verticale Z.

L'attache voilure arrière 24.4 comprend deux platines 34, 34' triangulaires, parallèles entre elles et faiblement espacées, qui présentent chacune des premier et deuxième sommets 34.1, 34.2 reliés par des éléments de liaison 36.1, 36.2 à la structure primaire 22 ainsi qu'un troisième sommet 34.3 relié par un élément de liaison 36.3 à l'aile 14. Ces éléments de liaison 36.1, 36.2, 36.3 présentent des axes orientés sensiblement selon la direction X.

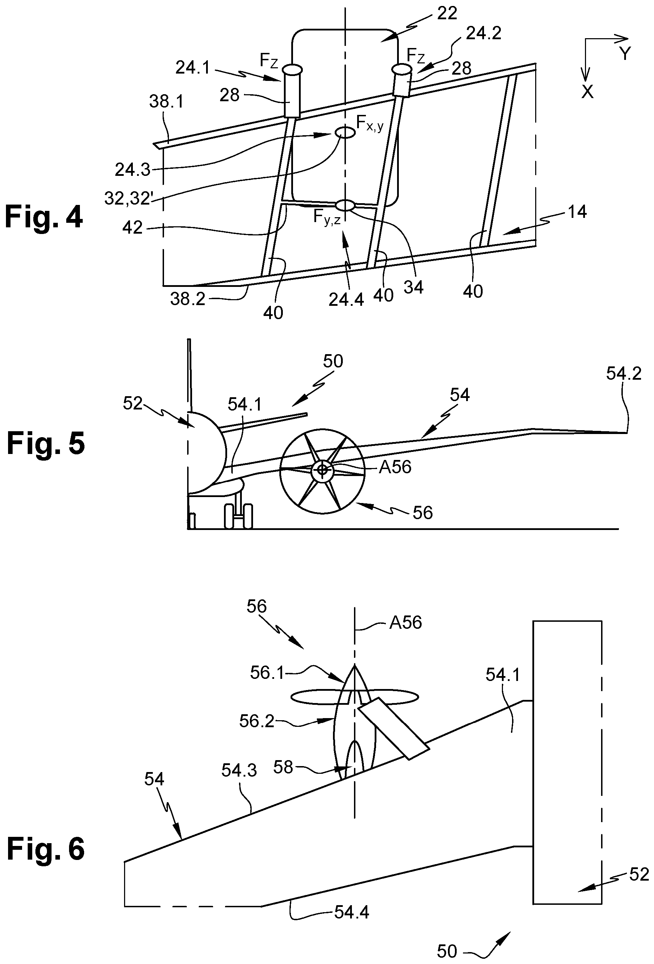

Selon un mode de réalisation visible sur la figure 4, l'aile 14 comprend un longeron avant 38.1, un longeron arrière 38.2 ainsi que des nervures 40 reliant les longerons avant et arrière 38.1, 38.2.

Selon un agencement, les attaches voilures avant 24.1, 24.2 sont positionnées à l'avant du longeron avant 38.1, sensiblement dans le prolongement de deux nervures 40. Les attaches voilures intermédiaire et arrière 24.3, 24.4 sont positionnées entre les longerons avant et arrière 38.1, 38.2 ainsi qu'entre deux nervures 40. L'aile 14 comprend également un raidisseur intermédiaire 42 auquel est reliée l'attache voilure arrière 24.4, ledit raidisseur intermédiaire 42 reliant deux nervures 40 et étant positionné entre les longerons avant et arrière 38.1, 38.2. Selon ce mode de réalisation, les efforts verticaux (sensiblement parallèles à la direction transversale verticale Z) sont repris par les attaches voilures avant 24.1, 24.2 et l'attache voilure arrière 24.4. L'attache voilure arrière 24.4 reprend également les efforts latéraux en Y. Les efforts horizontaux orientés selon les directions X et Y sont repris par l'attache voilure intermédiaire 24.3.

Des premiers couples My orientés selon la direction transversale horizontale Y sont repris par les attaches voilures avant et arrière 24.1, 24.2, 24.4. Des deuxièmes couples Mz orientés selon la direction transversale verticale Z sont repris par les attaches voilures intermédiaire 24.3 et arrière 24.4. Compte tenu de la distance relativement importante entre les attaches voilures avant 24.1, 24.2 et l'attache voilure arrière 24.4, le couple My induit des efforts relativement faibles entre la structure primaire 22 et l'aile 14. Compte tenu de la distance relativement importante entre l'attaches voilure intermédiaire 24.3 et l'attache voilure arrière 24.4, le couple Mz induit des efforts relativement faibles entre la structure primaire 22 et l'aile 14.

Des troisièmes couples Mx orientés selon la direction longitudinale X sont repris par les deux attaches voilures avant 24.1, 24.2. Compte tenu du faible espacement entre les attaches voilures avant 24.1, 24.2, les troisièmes couples Mx induisent des efforts relativement importants entre la structure primaire 22 et l'aile 14, ce qui impose de renforcer les attaches voilures avant 24.1, 24.2.

Pour réduire les efforts induits par les troisièmes couples Mx au niveau des attaches voilures avant 24.1, 24.2, une solution consiste à écarter les attaches voilures avant 24.1, 24.2. Cependant, cette solution n'est pas satisfaisante car elle conduit à élargir le mât, ce qui pénalise les performances aérodynamiques de l'aéronef.

La présente invention vise à remédier à tout ou partie des inconvénients de l'art antérieur.

A cet effet, l'invention a pour objet un aéronef comprenant un fuselage, des ailes qui s'étendent de part et d'autre du fuselage ainsi que des ensembles de propulsion positionnés sous les ailes et reliés à ces dernières par des mâts ; chaque ensemble de propulsion comprenant un moteur qui présente un axe de rotation, chaque mât comprenant une structure primaire reliée à une des ailes par au moins un système d'attache voilure et au moteur par au moins un système d'attache moteur, la structure primaire comportant au moins un longeron supérieur et une largeur maximale ; le système d'attache voilure comprenant au moins des première et deuxième attaches voilures, décalées selon une direction longitudinale parallèle à l'axe de rotation du moteur, configurées pour assurer une reprise au moins partielle des efforts et des couples orientés selon la direction longitudinale et selon des directions transversales horizontale et verticale perpendiculaires entre elles et à la direction longitudinale, les première et deuxième attaches voilures étant positionnées au niveau du longeron supérieur de la structure primaire.

Selon l'invention, le système d'attache voilure comprend :
- une attache voilure avant comportant au moins un élément de liaison qui présente un axe de pivotement, positionné dans un plan longitudinal vertical, formant un angle réduit avec la direction longitudinale,
- une attache voilure intermédiaire comportant au moins un élément de liaison qui présente un axe de pivotement formant un angle réduit avec la direction transversale horizontale,
- une attache voilure arrière comportant au moins un élément de liaison qui présente un axe de pivotement, positionné dans un plan longitudinal vertical, formant un angle réduit avec la direction longitudinale,
- au moins une bielle latérale qui s'étend entre des première et deuxième extrémités, la première extrémité étant reliée à la structure primaire, la deuxième extrémité étant reliée à la voilure et espacée au moins selon la direction transversale horizontale et/ou selon la direction transversale verticale par rapport à la structure primaire.

Cette bielle latérale permet de générer un deuxième chemin pour les efforts entre le moteur et l'aile, ce qui permet de réduire les contraintes appliquées à la structure primaire du mât. Cette bielle latérale permet également de rigidifier l'ensemble propulsif afin de solutionner des problèmes de déplacement ou de dynamique. Elle peut être installée sur un concept d'interfaces mât/voilure isostatique ou hyperstatique. Grâce à la bielle latérale, il est possible de réduire la largeur de la structure primaire tout en limitant les efforts induits par les couples sur la structure primaire et/ou l'aile.

Selon une autre caractéristique, la deuxième extrémité est espacée au moins selon la direction transversale horizontale et selon la direction transversale verticale par rapport à la structure primaire.

Selon une autre caractéristique, la deuxième extrémité de la bielle latérale est décalée vers le haut selon la direction transversal verticale par rapport à la première extrémité et plus proche du fuselage selon la direction transversale par rapport à la première extrémité.

Selon une autre caractéristique, la deuxième extrémité de la bielle latérale est espacée de la structure primaire d'une distance supérieure à la largeur maximale de la structure primaire. Selon une autre caractéristique, la première extrémité est décalée selon la direction transversale verticale vers le bas par rapport au longeron supérieur de la structure primaire. Selon une autre caractéristique, chaque aile comprend des longerons avant et arrière ainsi qu'une pluralité de nervures reliant les longerons avant et arrière. En complément, la deuxième extrémité de la bielle latérale est reliée au longeron avant et à une nervure de l'aile. Selon une autre caractéristique, les première et deuxième attaches voilures sont reliées à une nervure différente de la nervure à laquelle est reliée la bielle latérale.

Selon une autre caractéristique, la première extrémité de la bielle latérale est positionnée dans un plan transversal situé à l'avant de l'attache voilure avant.

Selon une autre caractéristique, la bielle latérale présente un corps creux pour loger au moins un élément, parmi une canalisation de fluide et un câble électrique, qui s'étend entre l'aile et la structure primaire.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue en perspective d'une structure primaire d'un mât d'aéronef illustrant un mode de réalisation de l'art antérieur,
- La figure 3 est une représentation schématique latérale d'un système d'attache voilure illustrant un mode de réalisation de l'art antérieur,
- La figure 4 est une représentation schématique de dessus d'un système d'attache voilure illustrant un mode de réalisation de l'art antérieur,
- La figure 5 est une demi-vue de face d'un aéronef illustrant un mode de réalisation de l'invention,
- La figure 6 est une vue de dessus d'une aile et d'un ensemble de propulsion illustrant un mode de réalisation de l'invention,
- La figure 7 est une représentation schématique de dessus d'un système d'attache voilure arrière illustrant un mode de réalisation de l'invention,
- La figure 8 est une vue en perspective d'une structure primaire et d'un système d'attache voilure illustrant un mode de réalisation de l'invention,
- La figure 9 est une représentation schématique latérale d'un système d'attache voilure illustrant un mode de réalisation de l'invention,
- La figure 10 est une représentation schématique de face d'un système d'attache voilure illustrant un mode de réalisation de l'invention,
- La figure 11 est une représentation schématique de dessus d'un système d'attache voilure illustrant un mode de réalisation de l'invention.

Selon un mode de réalisation visible sur les figures 5 et 6, un aéronef 50 comprend un fuselage 52, des ailes 54 qui s'étendent de part et d'autre du fuselage 52 ainsi que des ensembles de propulsion 56 positionnés sous les ailes 54 et reliés à ces dernières par des mâts 58.

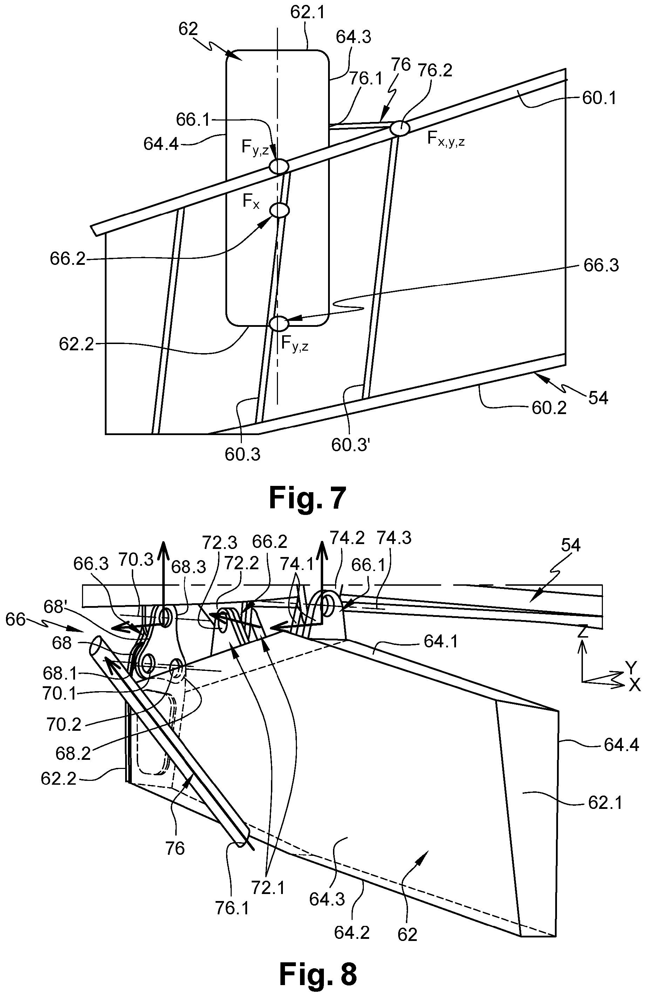

Selon une configuration, chaque aile 54 s'étend entre une première extrémité 54.1 reliée au fuselage 52 ainsi qu'une deuxième extrémité 54.2 libre, distante du fuselage 52. Chaque aile 54 présente un bord d'attaque 54.3 ainsi qu'un bord de fuite 54.4. Comme illustré sur la figure 7, sur le plan structurel, l'aile 54 comprend un longeron avant 60.1 sensiblement parallèle au bord d'attaque 54.3 et proche de ce dernier, un longeron arrière 60.2 sensiblement parallèle au bord de fuite 54.4 et proche de ce dernier ainsi qu'une pluralité de nervures 60.3 reliant les longerons avant et arrière 60.1, 60.2.

Selon une configuration, chaque ensemble de propulsion 56 comprend un moteur 56.1 qui présente un axe de rotation A56, comme un turboréacteur ou un turbopropulseur par exemple, ainsi qu'une nacelle 56.2 dans laquelle est positionné le moteur 56.1.

La direction longitudinale X est parallèle à l'axe de rotation A56 du moteur 56.1. Les directions transversales horizontale et verticale Y, Z sont perpendiculaires entre elles et perpendiculaires à la direction longitudinale X.

Les ailes 54 et les ensembles de propulsion 56 ne sont pas plus décrits car ils peuvent être identiques à ceux de l'art antérieur.

Le mât 58 comprend une structure primaire 62 (visible sur les figures 7 à 11), reliant le moteur 56.1 et une des ailes 54, qui s'étend entre des extrémités avant et arrière 62.1, 62.2. Selon une configuration, la structure primaire 62 est une structure en caisson et comprend des longerons supérieur et inférieur 64.1, 64.2 ainsi que des panneaux latéraux droit et gauche 64.3, 64.4. Bien entendu, l'invention n'est pas limitée à cette configuration pour la structure en caisson 62. La structure primaire 62 présente une largeur maximale L62 correspondant à la distance qui sépare les panneaux latéraux droit et gauche 64.3, 64.4. Quel que soit le mode de réalisation, la structure primaire 62 comprend au moins un longeron supérieur 64.1 et présente une largeur maximale L62.

L'aéronef 50 comprend au moins un système d'attache moteur reliant la structure primaire 62 et le moteur 56.1 ainsi qu'au moins un système d'attache voilure 66 reliant la structure primaire 62 et l'aile 54.

Selon un mode de réalisation, ce système d'attache voilure 66 comprend une attache voilure avant 66.1, une attache voilure intermédiaire 66.2, une attache voilure arrière 66.3 décalées selon la direction longitudinale X ainsi qu'au moins une bielle latérale 76 dont la fonction sera détaillée ultérieurement.

L'attache voilure arrière 66.3 est configurée pour assurer une reprise des efforts entre l'aile 54 et la structure primaire 62 selon les directions transversales horizontale et verticale Y, Z. Selon une configuration, l'attache voilure arrière 66.3 comprend deux platines 68, 68' triangulaires, parallèles entre elles et faiblement espacées, qui présentent chacune des premier et deuxième sommets 68.1, 68.2 reliés par des éléments de liaison 70.1, 70.2 à la structure primaire 62 ainsi qu'un troisième sommet 68.3 relié par un élément de liaison 70.3 à l'aile 54. Ces éléments de liaison 70.1, 70.2, 70.3 présentent des axes de pivotement parallèles entre eux et positionnés dans des plans longitudinaux verticaux XZ. Cette attache voilure arrière 66.3 n'est pas plus décrite car elle peut être identique à celles de l'art antérieur. Toutefois, l'invention n'est pas limitée à cette configuration pour l'attache voilure arrière 66.3. Quel que soit le mode de réalisation, l'attache voilure arrière 66.3 comprend au moins un élément de liaison 70.3 qui présente un axe de pivotement, positionné dans un plan longitudinal vertical XZ, formant un angle réduit avec la direction longitudinale X.

Par angle réduit, on entend pour la présente demande un angle inférieur à 10°.

Selon un agencement, l'attache voilure arrière 66.3 et plus particulièrement l'élément de liaison 70.3 sont reliés à une première nervure 60.3. L'attache voilure arrière 66.3, plus particulièrement les éléments de liaison 70.1, 70.2, sont positionnés au-dessus du longeron supérieur 64.1 de la structure primaire 62 et/ou reliés au longeron supérieur 64.1.

L'attache voilure intermédiaire 66.2 est configurée pour assurer une reprise des efforts entre l'aile 54 et la structure primaire 62 selon la direction longitudinale X. Selon une configuration, l'attache voilure intermédiaire 66.2 comprend une chape 72.1 solidaire d'un premier élément parmi l'aile 54 et la structure primaire 62, une patte 72.2 solidaire d'un deuxième élément différent du premier élément parmi l'aile 54 et la structure primaire 62 ainsi qu'un élément de liaison 72.3 traversant la chape 72.1 et la patte 72.2 et présentant un axe de pivotement orienté selon la direction transversale et horizontale Y. Selon un mode de réalisation, la chape 72.1 comprend deux ailes sensiblement parallèles entre elles et faiblement espacées, entre lesquelles est positionnée la patte 72.2. Les ailes de la chape 72.1 et la patte 72.2 sont positionnées dans des plans longitudinaux verticaux XZ et comprennent chacune un orifice traversant pour loger l'élément de liaison 72.3. Ce dernier comprend un corps cylindrique, logé dans les orifices traversants des ailes de la chape 72.1 et de la patte 72.2, formant avec les ailes de la chape 72.1 une liaison pivotante qui présente un axe de pivotement orienté selon la direction transversale horizontale Y. Selon une variante, le corps cylindrique de l'élément de liaison 72.3 forme avec la patte 72.2 une liaison pivotante qui présente un axe de pivotement orienté selon la direction transversale horizontale Y. En variante, le corps cylindrique de l'élément de liaison 72.3 forme avec la patte 72.2 une liaison rotule.

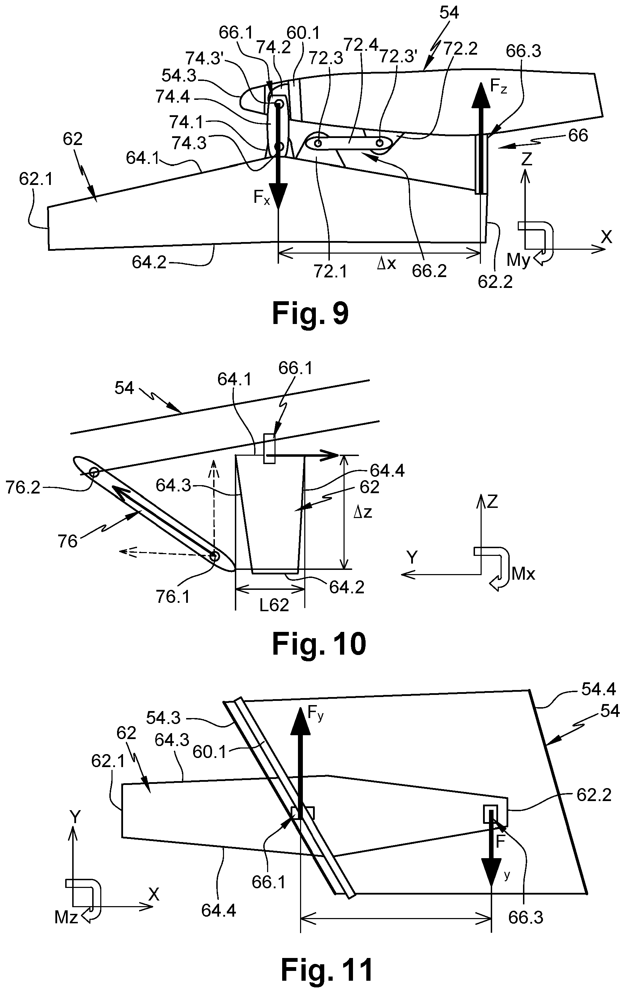

Selon une autre configuration visible sur la figure 9, l'attache voilure intermédiaire 66.2 comprend une première chape 72.1 solidaire de la structure primaire 62, une deuxième chape 72.2 solidaire de la voilure 54, une biellette 72.4, un premier élément liaison 72.3 reliant la biellette 72.4 et la première chape 72.1 ainsi qu'un deuxième élément de liaison 72.3' reliant la biellette 72.4 et la deuxième chape 72.2. Les premier et deuxième éléments de liaison 72.3, 72.3' peuvent former des liaisons pivotantes ou être associés à des rotules et former des liaisons pivotantes rotulées.

Toutefois, l'invention n'est pas limitée à ces configurations pour l'attache voilure intermédiaire 66.2. Quel que soit le mode de réalisation, l'attache voilure intermédiaire 66.2 comprend au moins un élément de liaison 72.3 qui présente un axe de pivotement formant un angle réduit avec la direction transversale horizontale Y.

Selon un agencement, l'attache voilure intermédiaire 66.2 est reliée à la première nervure 60.3. L'attache voilure intermédiaire 66.2 est positionnée au-dessus du longeron supérieur 64.1 de la structure primaire 62 et/ou reliée au longeron supérieur 64.1.

L'attache voilure avant 66.1 est configurée pour assurer une reprise des efforts entre l'aile 54 et la structure primaire 62 selon les directions transversales horizontale et verticale Y, Z. Selon une configuration, l'attache voilure avant 66.1 comprend une chape 74.1 solidaire d'un premier élément parmi l'aile 54 et la structure primaire 62, une patte 74.2 solidaire d'un deuxième élément différent du premier élément parmi l'aile 54 et la structure primaire 62 ainsi qu'un élément de liaison 74.3 traversant la chape 74.1 et la patte 74.2 et présentant un axe de pivotement orienté selon la direction longitudinale X. Selon un mode de réalisation, la chape 74.1 comprend deux ailes, sensiblement parallèles entre elles et faiblement espacées, entre lesquelles est positionnée la patte 74.2. Les ailes de la chape 74.1 et la patte 74.2 sont positionnées dans des plans transversaux YZ et comprennent chacune un orifice traversant pour loger l'élément de liaison 74.3. Ce dernier comprend un corps cylindrique, logé dans les orifices traversants des ailes de la chape 74.1 et de la patte 74.2, formant avec les ailes de la chape 74.1 une liaison pivotante qui présente un axe de pivotement orienté selon la direction longitudinale X. Selon une variante, le corps cylindrique de l'élément de liaison 74.3 forme avec la patte 74.2 une liaison pivotante qui présente un axe de pivotement orienté selon la direction longitudinale X. En variante, le corps cylindrique de l'élément de liaison 74.3 forme avec la patte 74.2 une liaison rotule.

Selon une autre configuration visible sur la figure 9, l'attache voilure avant 66.1 comprend une première chape 74.1 solidaire de la structure primaire 62, une deuxième chape 74.2 solidaire de la voilure 54, une biellette 74.4, un premier élément liaison 74.3 reliant la biellette 74.4 et la première chape 74.1 ainsi qu'un deuxième élément de liaison 74.3' reliant la biellette 74.4 et la deuxième chape 74.2. Les premier et deuxième éléments de liaison 74.3, 74.3' peuvent former des liaisons pivotantes ou être associés à des rotules et former des liaisons pivotantes rotulées.

Toutefois, l'invention n'est pas limitée à ces configurations pour l'attache voilure avant 66.1. Quel que soit le mode de réalisation, l'attache voilure avant 66.1 comprend au moins un élément de liaison 74.3 qui présente un axe de pivotement, positionné dans un plan longitudinal vertical XZ, formant un angle réduit avec la direction longitudinale X.

Selon un agencement, l'attache voilure avant 66.1 est reliée au longeron avant 60.1, sensiblement dans le prolongement de la première nervure 60.3. L'attache voilure avant 66.1 est positionnée au-dessus du longeron supérieur 64.1 de la structure primaire 62 et/ou reliée au longeron supérieur 64.1.

Selon une particularité de l'invention, le système d'attache voilure 66 comprend au moins une bielle latérale 76 qui s'étend entre des première et deuxième extrémités 76.1, 76.2, la première extrémité 76.1 étant reliée à la structure primaire 62, la deuxième extrémité 76.2 étant reliée à l'aile 54 et espacée au moins selon la direction transversale horizontale Y et/ou selon la direction transversale verticale Z par rapport à la structure primaire 62.

Selon un mode de réalisation, la deuxième extrémité 76.2 de la bielle latérale 76 est reliée au longeron avant 60.1 de l'aile 54 et à une deuxième nervure 60.3' différente et espacée de la première nervure 60.3. Selon un agencement, la deuxième extrémité 76.2 de la bielle latérale 76 est décalée en direction de la première extrémité 54.1 de l'aile 54 (celle reliée au fuselage 52) par rapport à la structure primaire 62. Selon une configuration, la deuxième extrémité 76.2 de la bielle latérale 76 est séparée de la structure primaire 62 d'une distance supérieure à la largeur maximale L62 de la structure primaire 62, et de préférence supérieure à deux fois la largeur maximale L62 de la structure primaire 62.

Selon un mode de réalisation, la première extrémité 76.1 de la bielle latérale 76 est décalée selon la direction transversale verticale Z, vers le bas, par rapport au longeron supérieur 64.1 de la structure primaire 62. Selon un agencement, la première extrémité 76.1 de la bielle latérale 76 est reliée au panneau latéral droit ou gauche 64.3, 64.4 de la structure primaire 62. Elle est positionnée plus proche du longeron inférieur 64.2 que du longeron supérieur 64.1 de la structure primaire 62. De préférence, la première extrémité 76.1 de la bielle latérale 76 est située au niveau du longeron inférieur 64.2 de la structure primaire 62.

Selon une configuration visible sur les figures 6 et 8, la deuxième extrémité 76.2 est décalée vers le haut selon la direction transversal verticale Z par rapport à la première extrémité 76.1 et plus proche du fuselage 52 selon la direction transversale Y par rapport à la première extrémité 76.1.

La première extrémité 76.1 de la bielle latérale 76 est positionnée dans un plan transversal situé à l'avant de l'attache voilure avant 66.1, comme illustré sur la figure 7.

Selon un mode de réalisation, la bielle latérale 76 présente un corps cylindrique. Au moins une des première et deuxième extrémités 76.1, 76.2 est reliée à l'aile 54 ou à la structure primaire 62 par une liaison pivotante rotulée ou non. La bielle latérale 76 est configurée pour limiter son impact sur les performances aérodynamiques de l'aéronef.

Selon une configuration, la bielle latérale 76 présente un corps creux pour loger au moins une canalisation de fluide et/ou au moins un câble électrique qui s'étend(ent) entre l'aile 54 et la structure primaire 62.

Bien entendu, l'invention n'est pas à ces modes de réalisation pour la bielle latérale 76. Cette dernière peut être creuse ou pleine, présenter une section transversale non circulaire et être reliée à l'aile 54 ou à la structure primaire 62 par tout moyen approprié.

Selon un agencement, la bielle latérale 76 est configurée pour assurer une reprise des efforts entre l'aile 54 et la structure primaire 62 selon les directions longitudinale ainsi que transversales horizontale et verticale X, Y, Z.

Comme illustré sur la figure 9, des premiers couples My orientés selon la direction transversale horizontale Y sont repris par les attaches voilures avant et arrière 66.1, 66.3. Compte tenu de la distance relativement importante entre les attaches voilures avant et arrière 66.1, 66.3, les premiers couples My induisent des efforts relativement faibles entre la structure primaire 62 et l'aile 54.

Comme illustré sur la figure 10, des deuxièmes couples Mx orientés selon la direction longitudinale X sont repris par la bielle latérale 76 et l'attache voilure avant 66.1. Compte tenu de la distance relativement importante entre la première extrémité 76.1 de la bielle latérale 76 et l'attache voilure avant 66.1, les deuxièmes couples Mx induisent des efforts relativement faibles entre la structure primaire 62 et l'aile 54. Contrairement à l'art antérieur, les efforts induits par les deuxièmes couples Mx ne sont pas liés à la largeur L62 de la structure primaire 62. Par conséquent, il est possible de réduire la largeur L62 de la structure primaire 62, de l'ordre de 25 à 30% par rapport à une structure primaire de l'art antérieur tout en limitant les efforts induits par les deuxièmes couples Mx sur la structure primaire 62 et l'aile 54. Comme illustré sur la figure 11, des troisièmes couples Mz orientés selon la direction transversale verticale Z sont repris par les attaches voilures avant et arrière 66.1, 66.3. Compte tenu de la distance relativement importante entre les attaches voilures avant et arrière 66.1, 66.3, les troisièmes couples Mz induisent des efforts relativement faibles entre la structure primaire 62 et l'aile 54.

Bien entendu, l'invention n'est pas limitée à ces modes de réalisation pour le système d'attache voilure 66. Quel que soit le mode de réalisation, le système d'attache voilure 66 comprend au moins des première et deuxième attaches voilures parmi une attache voilure avant 66.1, une attache voilure intermédiaire 66.2 et une attache voilure arrière 66.3, configurées pour assurer une reprise au moins partielle des efforts et des couples orientés selon des directions longitudinale X, transversale horizontale Y et transversale verticale Z, et positionnées au niveau du longeron supérieur 64.1 de la structure primaire 62. En complément, le système d'attache voilure 66 comprend au moins une bielle latérale 76 qui s'étend entre des première et deuxième extrémités 76.1, 76.2, la première extrémité 76.1 étant reliée à la structure primaire 62, la deuxième extrémité 76.2 étant reliée à l'aile 54 et espacée au moins selon la direction transversale horizontale Y et/ou la direction transversale verticale Z par rapport à la structure primaire 62. Selon un mode de réalisation, la deuxième extrémité 76.2 est espacée au moins selon les directions transversales horizontale et verticale Y, Z. Selon une configuration, les premier et deuxième attaches voilures parmi l'attache voilure avant 66.1, l'attache voilure intermédiaire 66.2, l'attache voilure arrière 66.3 sont reliées à une nervure 60.3 différente de la nervure 60.3' à laquelle est reliée la bielle latérale 76. Selon un autre mode de réalisation, le système d'attache voilure 66 comprend deux bielles latérales 76 positionnées de part et d'autre de la structure primaire 62.

Grâce à la bielle latérale 76, il est possible de réduire la largeur de la structure primaire 62 tout en limitant les efforts induits par les couples Mx, My, Mz sur la structure primaire 62 et/ou l'aile 54. Par ailleurs, cette bielle latérale permet de générer un deuxième chemin pour les efforts entre le moteur 56.1 et l'aile 54, ce qui permet de réduire les contraintes appliquées à la structure primaire 62 du mât. Lorsque la bielle latérale 76 est décalée vers le fuselage 52, elle permet d'introduire des efforts dans l'aile 54 dans une zone plus proche du fuselage 52 que le reste de l'attache voilure 66.

Enfin, la bielle latérale 76 peut être utilisée pour loger au moins une canalisation de fluide et/ou au moins un câble électrique, ce qui permet de désencombrer la structure primaire 62 du mât.

## Revendications

1. Aéronef comprenant un fuselage (52), des ailes (54) qui s'étendent de part et d'autre du fuselage (52) ainsi que des ensembles de propulsion (56) positionnés sous les ailes (54) et reliés à ces dernières par des mâts (58), chaque ensemble de propulsion (56) comprenant un moteur (56.1) qui présente un axe de rotation, chaque mât (58) comprenant une structure primaire (62) reliée à une des ailes (54) par au moins un système d'attache voilure (66) et au moteur (56.1) par au moins un système d'attache moteur (A56), la structure primaire (62) comportant au moins un longeron supérieur (64.1) et une largeur maximale (L62), le système d'attache voilure (66) comprenant au moins des première et deuxième attaches voilures décalées selon une direction longitudinale (X) parallèle à l'axe de rotation (A56) du moteur (56.1) et configurées pour assurer une reprise au moins partielle des efforts et des couples orientés selon la direction longitudinale (X) et selon des directions transversales horizontale et verticale (Y, Z) perpendiculaires entre elles et à la direction longitudinale (X), les première et deuxième attaches voilures étant positionnées au niveau du longeron supérieur (64.1) de la structure primaire (62) ; **caractérisé en ce que** le système d'attache voilure (66) comprend :
- une attache voilure avant (66.1) comportant au moins un élément de liaison (74.3) qui présente un axe de pivotement, positionné dans un plan longitudinal vertical (XZ), formant un angle réduit avec la direction longitudinale (X),
- une attache voilure intermédiaire (66.2) comportant au moins un élément de liaison (72.3) qui présente un axe de pivotement formant un angle réduit avec la direction transversale horizontale (Y),
- une attache voilure arrière (66.3) comportant au moins un élément de liaison (70.3) qui présente un axe de pivotement, positionné dans un plan longitudinal vertical (XZ), formant un angle réduit avec la direction longitudinale (X),
- au moins une bielle latérale (76) qui s'étend entre des première et deuxième extrémités (76.1, 76.2), la première extrémité (76.1) étant reliée à la structure primaire (62), la deuxième extrémité (76.2) étant reliée à la voilure (54) et espacée au moins selon la direction transversale horizontale (Y) et/ou selon la direction transversale verticale (Z) par rapport à la structure primaire (62).

2. Aéronef selon la revendication précédente, **caractérisé en ce que** la deuxième extrémité (76.2) est espacée au moins selon la direction transversale horizontale (Y) et selon la direction transversale verticale (Z) par rapport à la structure primaire (62).

3. Aéronef selon la revendication précédente, **caractérisé en ce que** la deuxième extrémité (76.2) de la bielle latérale (76) est décalée vers le haut selon la direction transversal verticale (Z) par rapport à la première extrémité (76.1) et plus proche du fuselage (52) selon la direction transversale (Y) par rapport à la première extrémité (76.1).

4. Aéronef selon l'une des revendications précédentes, **caractérisé en ce que** la deuxième extrémité (76.2) de la bielle latérale (76) est espacée de la structure primaire (62) d'une distance supérieure à la largeur maximale (L62) de la structure primaire (62).

5. Aéronef selon l'une des revendications précédentes, **caractérisé en ce que** la première extrémité (76.1) est décalée selon la direction transversale verticale (Z) vers le bas par rapport au longeron supérieur (64.1) de la structure primaire (62).

6. Aéronef selon l'une des revendications précédentes, **caractérisé en ce que** chaque aile (54) comprend des longerons avant et arrière (60.1, 60.2) ainsi qu'une pluralité de nervures (60.3) reliant les longerons avant et arrière (60.1, 60.2) et **en ce que** la deuxième extrémité (76.2) de la bielle latérale (76) est reliée au longeron avant (60.1) et à une nervure (60.3') de l'aile (54).

7. Aéronef selon la revendication précédente, **caractérisé en ce que** les première et deuxième attaches voilures sont reliées à une nervure (60.3) différente de la nervure (60.3') à laquelle est reliée la bielle latérale (76).

8. Aéronef selon l'une des revendications précédentes, **caractérisé en ce que** la première extrémité (76.1) de la bielle latérale (76) est positionnée dans un plan transversal situé à l'avant de l'attache voilure avant (66.1).

9. Aéronef selon l'une des revendications précédentes, **caractérisé en ce que** la bielle latérale (76) présente un corps creux, pour loger au moins un élément parmi une canalisation de fluide et un câble électrique, qui s'étend entre l'aile (54) et la structure primaire (62).
